# EUROPÄISCHE PATENTANMELDUNG

(11) **EP 2 039 628 A2**
(43) Veröffentlichungstag der Anmeldung: **25.03.2009**
(21) Anmeldenummer: 08021250.9
(22) Anmeldetag: 26.11.2007
(51) Int. Cl.: B65G 21/04, B65G 39/20

(54) **Förderanlage zum Transport von Gütern**

(30) Priorität: 24.07.2007 AT 11712007
(62) Teilanmeldung aus: 07450209.7
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei das Förderband (1) und der betreffende Tragbalken (2) mittels Schraubbolzen (4), deren Kopf sich in einer im Förderband (1) befindlichen Ausnehmung befindet, miteinander verbunden sind, dadurch gekennzeichnet, dass in den Tragbalken (2) von der dem Förderband (1) abgewandten Seite her auf die Schraubbolzen (4) Hutmuttern (43) aufgeschraubt sind.

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen und wobei zumindest bei einem Teil der Tragbalken zwischen der Unterseite der Tragbalken und der Oberseite des Förderbandes eine aus einem elastischen Material bestehende Dichtungsleiste vorgesehen ist und wobei das Förderband und der betreffende Tragbalken mittels Schraubbolzen, deren Kopf sich in einer im Förderband befindlichen Ausnehmung befindet, miteinander verbunden sind.

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen und deren von der Oberseite der Tragbalken abragende Enden mittels Muttern verschraubt sind.

Bei dieser Art der Befestigung besteht jedoch das Problem, dass die verschraubten Enden der Schraubmuttern durch das Fördergut so stark beschädigt werden können, dass die Schrauben nicht mehr gelöst werden können. Der gegenständlichen Erfindung liegt somit die Aufgabe zugrunde, eine solche Anordnung der Schrauben zu schaffen, dass diese Schwierigkeit vermieden wird.

Diese Aufgabe wird erfindungsgemäß dadurch gelöst, dass in den Tragbalken von der dem Förderband abgewandten Seite her auf die Schraubbolzen Hutmuttern aufgeschraubt sind. Vorzugsweise ist die Unterseite der Dichtungsleiste mit der Oberseite des Förderbandes durch Klebung verbunden. Weiters kann die Dichtungsleiste aus einem elastischen Material mit einer metallischen Verstärkungsleiste ausgebildet sein. Zudem kann das Förderband an seiner Unterseite mit einer dem betreffenden Tragbalken zugeordneten, quer zur Bewegungsrichtung des Förderbandes ausgerichteten Nut ausgebildet sein, in welche die metallische Verstärkungsleiste eingesetzt ist. Weiters kann sich die Verstärkungsleiste an der an den betreffenden Tragbalken anliegenden Seite der Dichtungsleiste befinden.

Der Gegenstand der Erfindung ist nachstehend anhand von in den Zeichnungen dargestellten Ausführungsbeispielen näher erläutert. Es zeigen:
- FIG.1: einen Abschnitt einer Transportanlage, in axonometrischer Darstellung;
- FIG.2: einen Abschnitt des Förderbandes der Förderanlage gemäß FIG.1, in axonometrischer Darstellung;
- FIG.3: einen Abschnitt des Förderbandes, in einem Längsschnitt;
- FIG.4: ein Ausführungsbeispiel der Befestigung des Förderbandes an einem Tragbalken, im Querschnitt;
- FIG.5: ein Ausführungsbeispiel der Befestigung des Förderbandes an einem Tragbalken, im Querschnitt.

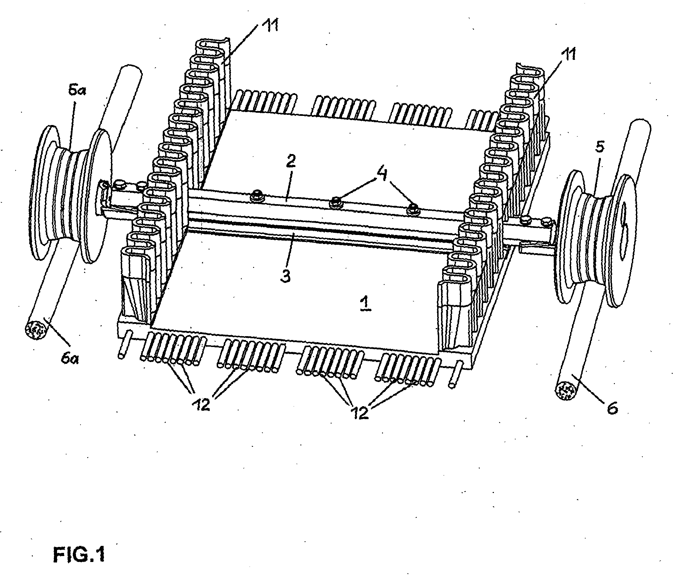

In FIG.1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schraubbolzen 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

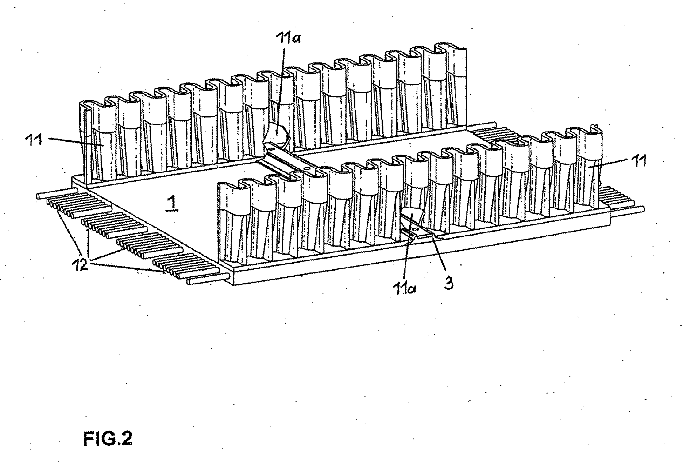

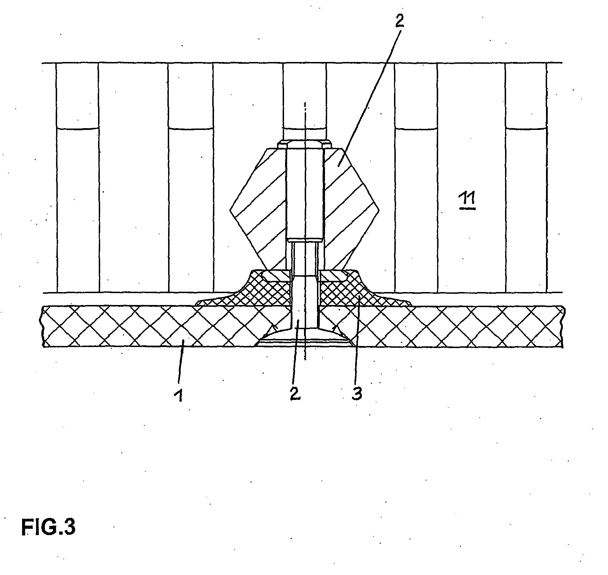

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.
Aus den FIG.2 und FIG.3 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.

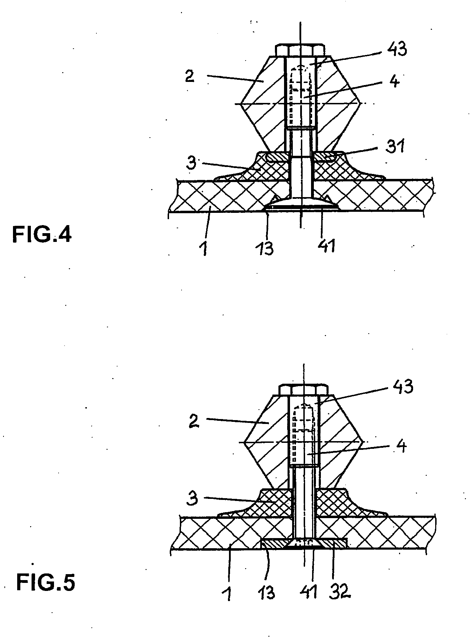

Wie dies aus FIG.4 ersichtlich ist, sind die Dichtungsleisten 3, welche mit dem Förderband 1 durch Klebung verbunden sind, mit Verstärkungsleisten 31 ausgebildet, welche an die Tragbalken 2 anliegen. Die Befestigung des Förderbandes 1 und der Dichtungsleisten 3 mit den Tragbalken 2 erfolgt mittels Schraubbolzen 4. Dabei befinden sich die Schraubbolzen 4 voneinander in solchen Abständen, wie diese aus FIG.1 ersichtlich sind. Der Kopf 41 der Schraubbolzen 4 ist in Ausnehmungen 11 eingesetzt, welche sich an der Unterseite des Förderbandes 1 befinden. Auf das freie Ende der Schraubbolzen 4, welche sich im Tragbalken 2 befinden, sind Hutmuttern 43 aufgeschraubt. Hierdurch ist gewährleistet, dass die Schraubbolzen 4 jederzeit wieder gelöst werden können, sobald dies für den Austausch von Tragbalken 2 erforderlich ist.
Auch bei dieser Art der Befestigung des Förderbandes 1 an den Tragbalken 2 unter Zwischenlage der Dichtungsleiste 3 wird die Ausbildung von Spalten zwischen dem Förderband 1 und den Tragbalken 2 vermieden. Aufgrund der Schraubverbindungen können die Tragbalken 2 in einfacher Weise vom Förderband 1 gelöst werden.

Das Ausführungsbeispiel der Befestigung des Förderbandes 1 an den Tragbalken 2 gemäß FIG.5 unterscheidet sich vom Ausführungsbeispiel gemäß FIG.4 dadurch, dass an der Unterseite des Förderbandes 1 Nuten 13 vorgesehen sind, in welchen sich Verstärkungsleisten 32 befinden, durch welche mittels der Schraubbolzen 4, welche die Dichtungsleisten 3, das Förderband 1 und die Verstärkungsleisten 32 durchsetzen, das Förderband 1 unter Zwischenlage der Dichtungsleisten 3 an die Tragbalken 2 über die gesamte Breite des Förderbandes 1 angepresst wird, wodurch gleichfalls die Ausbildung von Spalten zwischen dem Förderband 1 und den Tragbalken 2 ausgeschlossen wird. Auch dabei sind die Dichtungsleisten 3 mit dem Förderband 1 verklebt. Zudem sind die Schraubbolzen 4 so ausgebildet, dass diese jederzeit lösbar sind.

Ergänzend wird darauf verwiesen, dass die Tragbalken2 im Querschnitt sechseckig sind und dass sie als Vollkörper, also nicht rohrförmig, ausgebildet sind, wodurch sie auch bei einem durch das Transportgut verursachten starken Verschleiß lange Betriebszeiten ermöglichen.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei das Förderband (1) und der betreffende Tragbalken (2) mittels Schraubbolzen (4), deren Kopf sich in einer im Förderband (1) befindlichen Ausnehmung befindet, miteinander verbunden sind, **dadurch gekennzeichnet, dass** in den Tragbalken (2) von der dem Förderband (1) abgewandten Seite her auf die Schraubbolzen (4) Hutmuttern (43) aufgeschraubt sind.

2. Förderanlage nach Patentanspruch 1, **dadurch gekennzeichnet, dass** die Unterseite der Dichtungsleiste (3) mit der Oberseite des Förderbandes (1) durch Klebung verbunden ist.

3. Förderanlage nach einem der Patentansprüche 1 und 2, **dadurch gekennzeichnet, dass** die Dichtungsleiste (3) aus einem elastischen Material mit einer metallischen Verstärkungsleiste (31,32) ausgebildet ist.

4. Förderanlage nach Patentanspruch 3, **dadurch gekennzeichnet, dass** das Förderband (1) an seiner Unterseite mit einer dem betreffenden Tragbalken (2) zugeordneten, quer zur Bewegungsrichtung des Förderbandes (1) ausgerichteten Nut (13) ausgebildet ist, in welche die metallische Verstärkungsleiste (32) eingesetzt ist.

5. Förderanlage nach Patentanspruch 3, **dadurch gekennzeichnet, dass** sich die Verstärkungsleiste (31) an der an den betreffenden Tragbalken (2) anliegenden Seite der Dichtungsleiste (3) befindet.
